# EUROPÄISCHE PATENTSCHRIFT

(11) **EP 3 670 400 B1**
(45) Veröffentlichungstag und Bekanntmachung des Hinweises auf die Patenterteilung: **24.04.2024**
(21) Anmeldenummer: 19212346.1
(22) Anmeldetag: 28.11.2019
(51) Int. Cl.: B65G 47/244, B65B 25/06, B65G 61/00, B65B 35/16, B25J 5/02

(54) **UMSETZANLAGE SOWIE UMSETZVERFAHREN**
CONVERSION SYSTEM AND CONVERSION METHOD
INSTALLATION DE MISE EN UVRE ET PROCÉDÉ DE MISE EN UVRE

(30) Priorität: 18.12.2018 DE 102018132655
(43) Veröffentlichungstag der Anmeldung: 24.06.2020
(73) Patentinhaber: TVI Entwicklung und Produktion GmbH, 83052 Bruckmühl (DE)
(72) Erfinder: Völkl, Thomas, 83052 Bruckmühl (DE); Appel, Maximilian, 87466 Petersthal (DE)
(74) Vertreter: Weickmann & Weickmann PartmbB

(56) Entgegenhaltungen:
- EP-A2- 1 092 512
- WO-A1-2018/175902
- DE-A1-102016 105 570
- DE-A1-102016 108 003
- US-A1- 2018 022 557

## Beschreibung

### I. Anwendungsgebiet

Die Erfindung betrifft eine Umsetzanlage, die mittels eines oder mehrerer Roboter Produkte von einer Aufnahmefläche auf eine Ablagefläche umsetzt, wie sie insbesondere im Bereich der Verpackungstechnik als so genannte Roboterstraße häufig eingesetzt wird, um angelieferte Produkte umzusetzen, häufig in Behälter, so genannte Trays. Die Erfindung betrifft auch ein Umsetzverfahren zum Betrieb einer Umsetzanlage.

### II. Technischer Hintergrund

In der Praxis wird die Aufnahmefläche häufig in Durchlaufrichtung bewegt, insbesondere ständig und vorzugsweise kontinuierlich bewegt, indem es sich dabei um die Oberseite eines Produkt-Förderers handelt, der die Produkte von beispielsweise einer Produktionsanlage anliefert.

Die mit den Produkten zu belegenden Unterlagen, beispielsweise flache Boards oder zu füllende Trays oder in einer Folienbahn von einer Tiefzieh-Verpackungsmaschine geformten, zu füllende Mulden, werden häufig parallel zur Transportrichtung des Produkt-Förderers angeliefert und/oder abtransportiert, vorzugsweise in der gleichen Richtung wie die Produkte auf dem ProduktFörderer. Dabei werden die Produkte entweder ständig bewegt auf einem Tray-Förderer oder zeitweise angehalten bzw. die Mulden bei intermittierenden Betrieb einer Tiefzieh-Verpackungsmaschine zeitweise angehalten.

Dabei sind mehrere Roboter in Durchlaufrichtung hintereinander an festen Positionen in der Umsetz-Anlage montiert, meist hängend über dem ProduktFörderer und/oder Tray-Förderer.

Aufgrund der sich kontinuierlich bewegenden Aufnahmefläche und damit Aufnahme-Positionen der meist unregelmäßig darauf liegenden Produkte müssen die an den Robotern befestigten Werkzeuge in allen 3 Raumrichtungen bewegbar sein, und darüber hinaus das Werkzeug häufig zusätzlich eine Drehbewegung um die Hochachse durchführen können.

Zusammen mit dem notwendigen Antrieb des am Roboter befestigten Werkzeuges bedingt dies komplexe und aufwändige Roboter und bewirkt hohe Kosten einer solchen Umsetz-Anlage.

Nachteilig ist weiterhin, dass sich dabei alle Antriebe über dem Produkt befinden, und von dort Verschmutzungen herabfallen können, und lange Roboter-Arme und somit bei Betrieb des Roboters viel träge Masse beschleunigt werden muss, was einerseits starke Antriebe und andererseits einen stabilen Rahmen der Maschine erfordert.

In diesem Zusammenhang zeigt die US 2018/0022557 A1 als nächstereichender Stand der Technik eine Umsetz-Anlage nach dem Oberbegriff des Anspruchs 1, wobei die Verfallbarkeit des Roboters 20' laut Figur 11 zeichnerisch ein Verfahren in Längsrichtung der Pufferstrecken ermöglicht, laut Beschreibung die Verfallbarkeit jedoch dazu da ist, um den Roboter quer zu den Pufferstrecken zu verfahren.

### III. Darstellung der Erfindung

### a) Technische Aufgabe

Es ist daher die Aufgabe gemäß der Erfindung, eine insbesondere für das Umsetzen von hygienisch kritischen Lebensmittelprodukten geeignete Umsetz-Anlage zur Verfügung zu stellen, die einfach, wartungsarm, reinigungsfreundlich und kostengünstig herstellbar ist, sowie ein Verfahren zu ihrem Betrieb.

### b) Lösung der Aufgabe

Diese Aufgabe wird durch die Merkmale der Ansprüche 1 und 8 gelöst. Vorteilhafte Ausführungsformen ergeben sich aus den Unteransprüchen.

Hinsichtlich des Umsetzverfahrens von Produkten von einer Aufnahmefläche auf eine Ablagefläche mittels eines Roboters wird diese Aufgabe gemäß den Merkmalen des Anspruchs 8 gelöst.

Vorzugsweise wird die Roboter-Basis dabei auf einem Niveau unterhalb von Aufnahmefläche und Ablagefläche in der Transportrichtung gesteuert verfahren.

Dadurch ist zum Einen der Aufbau des Roboters sehr einfach, indem er nur einen einzigen, um eine einzige Schwenkachse verschwenkbaren, Roboter-Schwenkarm benötigt und darüber hinaus lediglich der Roboter in Transportrichtung gesteuert verfahrbar sein muss.

Zum Anderen ist diese Lösung sehr hygienisch, da bei einer Bewegung der Roboter-Basis unter der Aufnahmefläche und/oder der Ablagefläche dort auftretende Verschmutzungen wie etwa Abrieb nicht schwerkraftbedingt auf das Produkt fallen können, da sich dieses weiter oben befindet.

Oberhalb dieser Flächen befinden sich so wenige Teile, dass die Wahrscheinlichkeit, dass dort starker Verschleiß und herabfallende Teile auftreten, sehr gering ist.

Vorzugsweise ist zumindest die Aufnahmefläche für die Produkte in Transportrichtung meist ständig bewegt, auch während der Aufnahme von Produkten, sodass sich die Roboter-Basis - gegebenenfalls mit etwas geringerer Geschwindigkeit als die Aufnahmefläche - mit dieser in der gleichen Richtung bewegt.

Der Roboter wird in Zeitabschnitten, in denen der Produktstrom/Zustrom entlang der Aufnahmeflächen pro Zeiteinheit größer ist als die von den Robotern bewältigbare Umsetzmenge pro Zeiteinheit, in Transportrichtung verfahren. In Zeitabschnitten, in denen der Produktstrom/Zustrom geringer ist als die bewältigbare Umsetzmenge pro Zeiteinheit, wird dagegen wenigstens einer der Roboter entgegen der Transportrichtung des Produktbandes zurück verfahren.

Diese Vorgehensweise eignet sich somit insbesondere für Aufgabenstellungen, bei denen der Produktstrom nicht gleichmäßig ist, sondern insbesondere periodisch schwankt. Beispielsweise bei Fleischscheiben, die stromaufwärts der Umsetzanlage und des Umsetzvorganges aus Fleisch-Laiben durch Aufschneiden hergestellt werden, sodass in den Zeiten, in denen der nächste Laib in die Schneidemaschine nachgelegt wird, der Produktstrom unterbrochen ist.

Vorzugsweise wird die Ablagefläche ebenfalls gesteuert verfahren. Vorzugsweise parallel zur und in der gleichen Transportrichtung wie die Aufnahmefläche, wobei sie während des Ablagevorganges eines Produktes auf der Ablagefläche stillstehen kann, insbesondere kurzfristig angehalten werden kann, aber auch weiter bewegt werden kann.

Vorzugsweise werden die Ablagefläche und die Aufnahmefläche auf der gleichen Höhe angeordnet.

Hinsichtlich der Umsetzanlage wird diese Aufgabe gemäß den Merkmalen des Anspruchs 1 gelöst.

Dies ergibt einen besonders einfachen Aufbau des Roboters und damit eine insgesamt einfache und kostengünstige Umsetz-Anlage.

Die aufrechte Richtung ist dabei vorzugsweise die Vertikale, um einseitige Belastungen bestimmter Komponenten des Roboters, insbesondere der AxialLager, möglichst zu vermeiden.

Die Erstreckungsrichtungen der Aufnahmefläche verlaufen dabei vorzugsweise im rechten Winkel zu der aufrechten Richtung, insbesondere der Vertikalen, sodass die Aufnahmefläche vorzugsweise horizontal liegt.

Die Ablagefläche verläuft vorzugsweise parallel zur Aufnahmefläche, gegebenenfalls auf gleicher Höhe zur Aufnahmefläche.

Dadurch vereinfacht sich der Rechenaufwand für die Steuerung der Roboter seitens der Steuerung.

Vorzugsweise ist die Aufnahmefläche, auf der die Produkte liegen und angeliefert werden, in Transportrichtung beweglich und es handelt sich dabei meist um die Oberseite eines Produktförderers, insbesondere eines Förderbandes.

Das gleiche kann auch für die Ablagefläche gelten, auf denen die Produkte direkt oder in einem auf der Ablagefläche befindlichen Tray oder den Mulden eines Folienbandes oder anderweitig identifizierbaren Ablagepositionen abgelegt werden.

Dadurch bewegen sich diese Ablagepositionen parallel und immer im gleichen Abstand zu einem entsprechenden Produkt und vorzugsweise auch in der gleichen Richtung, wenn es sich um eine Gleichlauf-Umsetzanlage handelt.

Der Schwenkarm wird von einer Roboter-Basis getragen, gegenüber der er schwenkbar ist, wobei die Roboter-Basis mittels eines Roboter-Transporteurs in einer in Transportrichtung des Produktbandes verlaufenden Roboter-Transportrichtung verfahrbar ist.

Die Roboter-Basis wird - in Transportrichtung der Roboter-Basis betrachtet - vorzugsweise im Breiten-Bereich zwischen den von der Ablagefläche wegweisenden äußeren Rändern der Aufnahmefläche einerseits und der Ablagefläche andererseits angeordnet.

Zum Einen hält dies die Breite der Umsetzanlage so gering wie möglich und durch die Anordnung unter diesen Flächen können auf Grund des Betriebes des Roboter-Transporteurs entstehende Verunreinigungen nicht schwerkraftbedingt auf die Produkte herabfallen.

Der Roboter-Transporteur kann primär aus einer Roboter-Führung bestehen, entlang der die Roboter-Basis in Roboter-Transportrichtung geführt wird, wobei jeder Roboter über einen anderen eigenen Längs-Motor verfügen kann, der beispielsweise ein Antriebsritzel antreibt, welches mit einer Zahnstange, die Bestandteil der Roboter-Führung ist und entlang dieser verläuft, eingreift. Dadurch können die einzelnen Roboter sehr einfach unabhängig voneinander verfahren werden.

Die Roboter können jedoch auch jeweils mit einem endlichen oder endlos umlaufenden Zugelement fest verbunden sein und dieses Zugelement in Roboter-Transportrichtung mittels jeweils eines Längs-Motors gesteuert bewegbar sein, sowohl in als auch entgegen der Transportrichtung.

Die unterhalb des Höhenniveaus von Ablagefläche und/oder Aufnahmefläche geführte Roboter-Basis trägt eine nach oben bis oberhalb des Niveaus dieser Flächen aufragende Tragsäule, in deren oberen Bereich der Schwenkarm, der quer zur aufrechten Richtung, insbesondere zur Vertikalen, in der sich die Tragsäule erstreckt, abragt und um eine aufrechte Achse verschwenkbar ist.

Dabei können Tragsäule und Schwenkarm eine Einheit bilden, die um die aufrechte Achse gegenüber der Roboter-Basis verschwenkbar ist oder es können Roboter-Basis und Tragsäule eine Einheit bilden, gegenüber welcher der Schwenkarm um die aufrechte Achse verschwenkt werden kann.

Der am freien Ende des Schwenkarms befestigte Greifer, der die darunter auf der Aufnahmefläche liegenden Produkte ergreifen und zur Ablagefläche transferieren soll, muss diese hierfür von der Aufnahmefläche zunächst hochheben und danach auf die Ablagefläche absenken können.

Zu diesem Zweck ist der Greifer relativ zum Schwenkarm in der Höhe verlagerbar ausgebildet, beispielsweise mittels einer Greifersäule, mit der der Abstand zwischen Roboter-Basis und Schwenkarm gesteuert verändert werden kann.

Der Höhen-Motor, der die Höhenlage des Greifers verstellt, sowie der Schwenkmotor, der die Schwenkstellung des Schwenkarmes verstellt, sind vorzugsweise jeweils an der Roboter-Basis angeordnet, von wo aus jeweils mittels eines Antriebstranges die Bewegung auf den Greifer beziehungsweise den Schwenkarm übertragen wird, um deren zu bewegende Masse gering zu halten.

Sofern ein Drehmotor vorhanden ist, um den Greifer um die aufrechte Achse gesteuert drehen zu können, und damit auch ein davon gehaltenes Produkt und/oder ein Werkzeugmotor vorhanden ist zum Betätigen des Greifers oder eines anderen Werkzeuges, sind vorzugsweise auch diese an der Roboter-Basis angeordnet.

Auf diese Art und Weise sind die Roboter sehr leicht, insbesondere hinsichtlich ihrer im Betrieb zu bewegenden Massen.

Da die Roboter-Basis jedoch über eine bestimmte Strecke, dem Umsetzbereich, mit gesteuerter und/oder bevorzugt nahezu unveränderter Geschwindigkeit in der Roboter-Transportrichtung verfahrbar sein soll, bis der Produktstrom nachlässt oder unterbrochen wird, muss die Roboter-Basis nur in relativ großen zeitlichen Abständen beschleunigt werden mit moderaten Beschleunigungswerten.

### c) Ausführungsbeispiele

Ausführungsformen gemäß der Erfindung sind im Folgenden beispielhaft näher beschrieben. Es zeigen:
- **Fig. 1:**: Einen Ausschnitt aus einer Umsetzanlage in der Aufsicht und
- **Fig. 2:**: die Umsetzanlage der Fig. 1 in einem Vertikalschnitt.

Wie bei den meisten Umsetzanlagen laufen dabei ein Produktförderer 2 und ein Trayförderer 3 nebeneinander, wobei auf der nach oben weisenden Aufnahmefläche 2a - der Oberseite des Oberturms dieses endlos umlaufenden Produktförderers 2 - die in diesem Fall scheibenförmigen Produkte P in einer Transportrichtung 10, angeliefert werden, die die Haupt-Erstreckungsrichtung dieses Produktförderers 2 ist.

Auf der Ablagefläche 3a - der Oberseite des Oberturms des Trayförderers 3 - werden nach oben offene Trays T herantransportiert, in welche in diesem Fall nur jeweils ein Produkt P abgelegt werden soll, aber natürlich können dies auch mehrere Produkte P bei anderen Anwendungsfällen sein. Die Trays T werden in diesem Fall in der gleichen Transportrichtung 10 wie die Produkte P sowohl angeliefert also abtransportiert.

Die Aufnahmefläche 2a sowie die Ablagefläche 3a befinden sich hier zueinander fluchtend auf der gleichen Höhe und definieren die Arbeitsebene 13. Falls die beiden Flächen sich nicht auf der gleichen Höhe befinden, definiert die höhere von beiden die Arbeitsebene 13.

In Transportrichtung 10 hintereinander sind in diesem Fall zwei Roboter 50 dargestellt, die jeweils einen Greifer oder Sauger 54 auf die Oberseite eines auf der Aufnahmefläche 2a aufliegenden Produktes P absenken können, das Produkt P ergreifen, hochheben, durch Verschwenken des Schwenkarmes 52 des Roboters 50 über einem Tray T positionieren und die Drehlage des Produktes P hierzu ausrichten und dann in dem Tray T ablegen können.

Im vorliegenden Fall werden die Produkte P, während sich die Auflagefläche 2a weiterbewegt, ergriffen, während die Trays T bei der Ablage eines Produktes P stillstehen, da die in Transportrichtung angelieferten Trays T an einer Barriere 5 angestaut werden, die sich etwa am Ende des Umsetzbereiches 4 befindet und danach in Transportrichtung 10 abtransportiert.

Das Einlegen in die Trays T kann jedoch auch bei laufenden Trays T geschehen.

Als Umsetzbereich 4 wird diejenige Strecke in Transportrichtung 10 der Produkte P verstanden, deren Anfang in Transportrichtung 10 die stromaufwärtigste Produktposition auf der Auflagefläche 2a ist, die der stromaufwärtigste Roboter 50 erreichen kann und deren Ende die stromabwärtigste Produktposition auf der Auflagefläche 2a ist, die der stromabwärtigste Roboter 50 auf der Auflagefläche 2a erreichen kann.

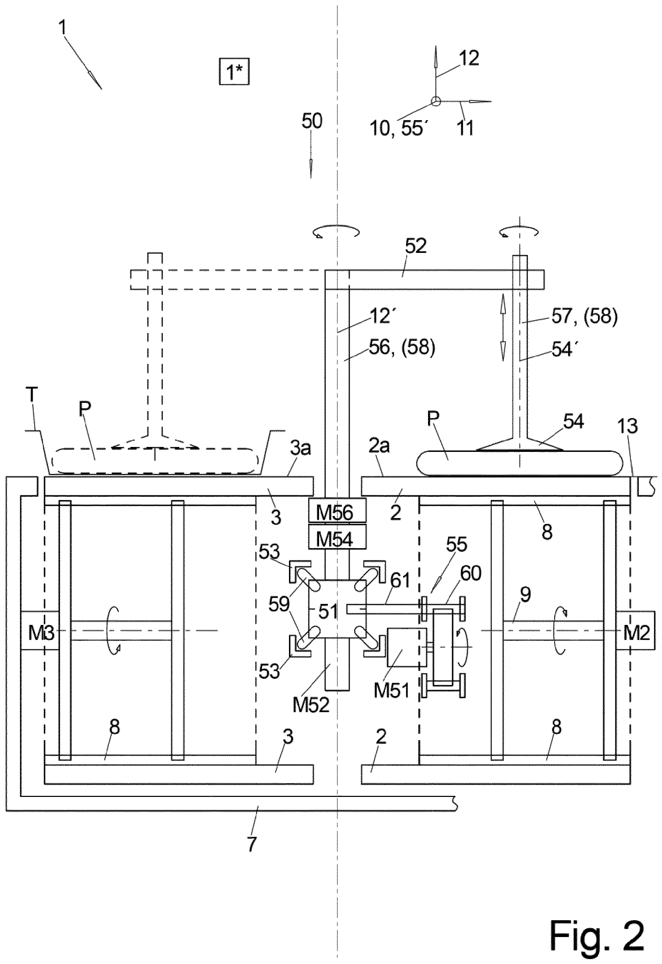

Wie am besten **Figur 2** zeigt, besteht die erste erfindungsgemäße Besonderheit dieser Umsetz-Anlage darin, dass ein möglichst großer Teil jedes Roboters 50, insbesondere seiner beweglichen Teile oder seiner Motore, sich unterhalb der Aufnahmefläche 2a und / oder der Ablagefläche 3a befindet, damit von diesen darunter befindlichen Komponenten evtl. erzeugter Schmutz wie etwa Abrieb nicht auf die Produkte P fallen kann.

Des Weiteren ist jeder Roboter sehr einfach aufgebaut und besitzt nur wenige Komponenten:
Von einer Roboter-Basis 51, die sich unterhalb der Arbeitsebene befindet, ragt eine Tragsäule 56 nach oben und zwar zwischen der Aufnahmefläche 2a und der Ablagefläche 3a hindurch, also in diesem Beispiel zwischen dem Produktförderer 2 und dem Trayförderer 3 hindurch.

Am oberen Ende dieser Tragsäule 56 ist ein etwa horizontal verlaufender Schwenkarm 52 befestigt, der um eine aufrechte, meist in der Vertikalen 12 verlaufende, Schwenkachse 12' herum verschwenkbar ist, sodass sich sein freies Ende wahlweise über dem Produktförderer 2 oder dem Trayförderer 3 befindet.

Am freien Ende des Schwenkarmes 52 ist eine Greifersäule 57 befestigt, die vom Schwenkarm 52 aus nach unten ragt und an deren unteren Ende ein Greifer 54, hier in Form eines Saugers 54, befestigt ist.

Der Schwenkarm 52 kann entweder allein um die aufrechte Schwenkachse 12' gegenüber der Tragsäule 56 verschwenkbar sein, oder zusammen mit dieser gegenüber der Roboter-Basis 51 um die Schwenkachse 12' verschwenkbar sein, bewirkt mittels eines Schwenk-Motors M52, der ebenfalls unterhalb der Arbeitsebene 13 angeordnet ist, vorzugsweise an der Roboter-Basis 51.

Die Höhenverstellung des Greifers 54 kann erfolgen indem entweder die Tragsäule 56 und/oder die Greifersäule 57 als in der Höhe gesteuert verstellbare Hubsäule 58 ausgebildet ist mittels eines Höhen-Motors M56, wobei letzteres bevorzugt ist, da hierdurch weniger Masse vertikal bewegt werden muss. Dass die Hubsäule 58 in der Höhe gesteuert verstellbar ist bedeutet, dass sich
- entweder die Hubsäule 58 in ihrer Länge verändern kann, und die daran angreifenden beiden anderen Bauteile jeweils in einem der Endbereich der Hubsäule befestigt sind
- oder die Hubsäule 58 eine gleichbleibende Länge besitzt, aber die Befestigungsstelle wenigstens eines der beiden daran angreifenden Bauteile sich entlang der Hubsäule 58 bewegen kann.

Unabhängig davon ist der diese Höhenveränderung bewirkende Höhen-Motor M56 vorzugsweise ebenfalls unterhalb der Arbeitsebene 13 angeordnet, entweder ebenfalls an der Roboter-Basis 51 oder im Verlauf der Tragsäule 56, jedoch noch unterhalb der Arbeitsebene 13.

Die Greifer oder Sauger 54 sind ferner um eine aufrechte Greifer-Achse 54' drehbar, um eine für die Ablage im Tray T gewünschte Drehlage des daran befestigten Produktes P erreichen zu können.

Der dies bewirkende Dreh-Motor M54 ist vorzugsweise ebenfalls unterhalb der Arbeitsebene 13 an der Roboter-Basis 51 oder im Verlauf der Tragsäule 56 befestigt und die Drehung dieses Drehmotors 54 wird vorzugweise im Inneren des Schwenkarmes 52 zur Greifersäule 57 übertragen, welche drehbar im Schwenkarm 52 gelagert ist.

Auf diese Art und Weise besteht der Roboter 50 zum einen aus sehr wenigen Einzelteilen, und weist insbesondere sehr wenige Lagerstellen auf, die darüber hinaus jeweils nur eindimensionale Gelenke darstellen, und von denen sich nur sehr wenige oberhalb der Arbeitsebene 13 befinden müssen.

Die andere erfindungsgemäße Besonderheit besteht darin, dass die, vorzugsweise alle, im Umsetzbereich 4 vorhandenen Roboter 50 in und entgegen der Transportrichtung 10 verfahrbar sind, also nicht nur hinsichtlich ihres Greifers 54 beweglich sind, sondern der gesamte Roboter, zumindest die Tragsäule 56 und insbesondere auch die Roboter-Basis 51, vorzugsweise mit allen Motoren des Roboters 50, in und entgegen der Transportrichtung 10 beweglich ist.

Dabei stehen unterschiedliche Möglichkeiten des Antriebs zur Verfügung, jedoch sollen die einzelnen Roboter 50 unabhängig voneinander verfahrbar sein und werden sich in aller Regel nicht gegenseitig überholen können.

In **Figur 2** ist die Roboter-Basis 51 entlang einer Führung 53 verfahrbar, gegenüber der sich die Roboter-Basis 51 beispielsweise mit Hilfe von Gleitrollen 59 abstützt. Vorzugsweise sind alle Roboter 50 entlang der gleichen Führung 53 geführt.

Die Längsbewegung des Roboters 50 sowie insbesondere der Roboter-Basis 51 wird in diesem Fall bewirkt durch ein neben oder unter der Führung 53 endlos in einer in Längsrichtung 10 verlaufendes Zugelement 60. Dies ist beispielsweise ein Riemen oder eine Kette, die über zwei in Transportrichtung 10 beabstandete Umlenkritzel umläuft, wobei in diesem Fall vom Obertrum des Zugelementes 60 ein Fortsatz 61 abragt und mit der Roboter-Basis 51 gekoppelt ist.

Der Antrieb des Zugelementes 60 erfolgt mittels eines Längsmotors M51, der mit einem der beiden Umlenkritzel wirkverbunden ist. Somit kann die Roboter-Basis 51 gesteuert in Längsrichtung 10 bewegt werden.

Sowohl die Führung 53 als auch das Zugelement 60 befinden sich dabei ebenfalls unterhalb der Arbeitsebene 13.

Vorzugsweise ist der Bereich unterhalb der Arbeitsebene 13 von einem seitlich und vorzugsweise auch unten geschlossenen Grundgestell 7 abgedeckt, gegenüber dem sowohl die Umlenkrollen 8 von Trayförderer 3 und Produktförderer 2 gelagert sind, als auch die Umlenkritzel des Zugelementes 60.

Vorzugsweise besteht die Umlenkrolle 8 aus zwei in Querrichtung 11 beabstandeten und wirkverbundenen Ritzeln, um über die in Querrichtung 11 gemessene Breite des Trayförderers 3 und / oder Produktförderers 2 diese antreiben zu können von dem jeweiligen Produkt-Motor M2 oder sich Tray-Motor M3 über eine Welle 9, die mit beiden Ritzeln verbunden ist.

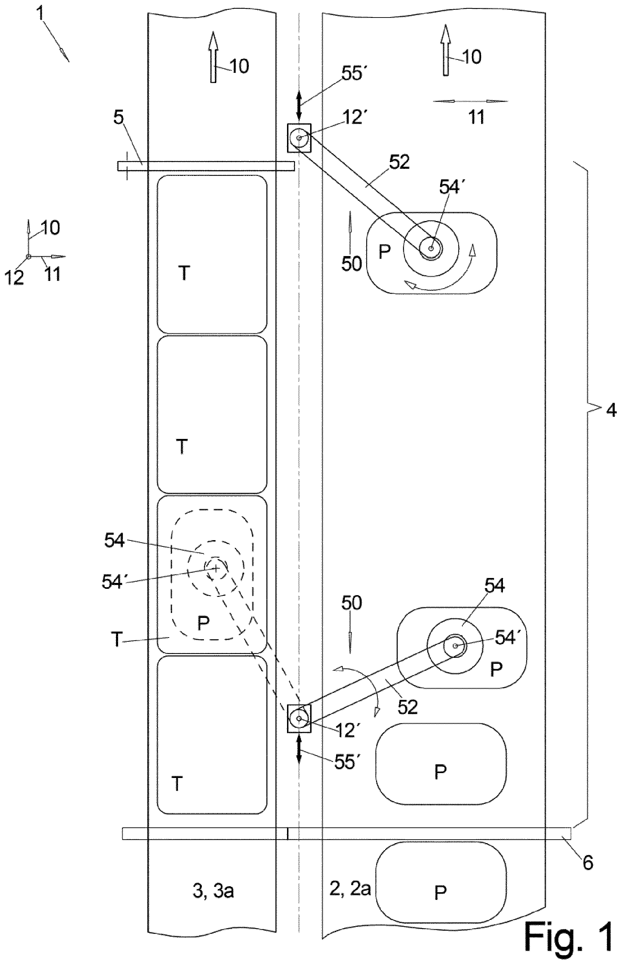

Auf diese Art und Weise kann - wie aus **Figur 1** ersichtlich - ein Roboter 50, der die von ihm umzusetzenden Produkte P aufgrund einer starken Anlieferungsdichte von Produkten P nicht zeitgleich umsetzen kann, in Transportrichtung 10 mitlaufen - mit einer Geschwindigkeit, die meist geringer ist als die Anlieferungsgeschwindigkeit der Produkte P - und dann, wenn die pro Zeiteinheit angelieferte Menge von Produkten P geringer ist oder eine Lücke im Produktstrom vorhanden ist, sich wieder entgegen der Transportrichtung 10 zurückbewegen, vorzugsweise jedoch nur innerhalb des Umsetzbereiches 4 und so, dass keine Kollision mit einem anderen Roboter 50 auftritt.

### BEZUGSZEICHENLISTE

- 1: Umsetz-Anlage
- 2: Produktförderer
- 2a: Aufnahmefläche
- 3: Trayförderer
- 3a: Ablagefläche
- 4: Umsetzbereich
- 5: Barriere
- 6: Scanner
- 7: Grundgestell
- 8: Umlenkrolle
- 9: Welle
- 10: Transportrichtung, Haupt-Erstreckungsrichtung
- 11: horizontale Querrichtung, sekundäre Erstreckungsrichtung
- 12: aufrechte Richtung, Vertikale
- 12': Schwenkachse

- 50: Roboter
- 51: Roboter-Basis
- 52: Schwenkarm
- 53: Führung
- 54: Greifer
- 54': Greifer-Achse
- 55: Roboter-Transporteur
- 55': Roboter-Transportrichtung
- 56: Tragsäule
- 57: Greifersäule
- 58: Hubsäule
- 59: Gleitrolle
- 60: Zugelement

- M2: Produkt-Motor
- M3: Tray-Motor
- M51: Längs-Motor
- M52: Schwenk-Motor
- M54: Dreh-Motor
- M56: Höhen-Motor

## Patentansprüche

1. **Umsetz-Anlage** (1) zum Umsetzen von Produkten (P) mit
- mindestens einem Roboter (50) zum Aufnehmen, Umsetzen und Ablegen wenigstens eines Produktes (P) in einem Umsetzbereich (4),
- einer Aufnahmefläche (2a) zum Vorhalten von Produkten (P) im Umsetzbereich (4),
- einer Ablagefläche (3a) zum Ablegen von Produkten (P) im Umsetzbereich (4),
- einem Scanner (6) zum Detektieren der Position und Drehlage der Produkte (P) auf der Aufnahmefläche (2a),
- einer Steuerung (1*) zum Steuern zumindest aller beweglichen Teile der Umsetz-Anlage (1),
wobei der Roboter (50)
- eine Roboter-Basis (51) umfasst, die einen Schwenkarm (52) trägt,
- die Roboter-Basis (51) mittels eines Roboter-Transporteurs (55) in einer Roboter-Transportrichtung (55'), die die Transportrichtung (10), die Haupt-Erstreckungsrichtung (10) der Aufnahmefläche (2a), ist, gesteuert verfahrbar ist,
- die Roboter-Transportrichtung (55') in der Transportrichtung (10) betrachtet zwischen den voneinander wegweisenden äußeren Rändern der Aufnahmefläche (2a) und der Ablagefläche (3a) angeordnet ist,
- der Schwenkarm (52) um eine in einer aufrechten Richtung (12) verlaufende Schwenkachse (12') schwenkbar ist sowie
- einen Greifer (54) umfasst, der am Roboterarm abseits von dessen Schwenkachse (12') in der Höhe beweglich befestigt ist,
**dadurch gekennzeichnet, dass**
- der Roboter-Transporteur (55) und/oder die Roboter-Basis (51) unterhalb der Aufnahmefläche (2a) und/oder der Ablagefläche (3a) angeordnet ist,
- zwischen der Roboter-Basis (51) und dem Schwenkarm (52) eine in der aufrechten Richtung (12), insbesondere der Vertikalen (12), verlaufende Tragsäule (56) vorhanden ist, welche sich zwischen der Aufnahmefläche (2a) und der Ablagefläche (3a), hindurch erstreckt.

2. Umsetz-Anlage nach Anspruch 1,
**dadurch gekennzeichnet, dass**
- die aufrechte Richtung (12) die Vertikale (12) ist,
und/oder
- die Erstreckungsrichtungen (10, 11) der Aufnahmefläche (2a) im rechten Winkel zur aufrechten Richtung (12), insbesondere der Vertikalen (12), verlaufen und insbesondere die Aufnahmefläche (2a) horizontal liegt
und/oder
- die Ablagefläche (3a) parallel zur Aufnahmefläche (2a) liegt und insbesondere auf der gleichen Höhe angeordnet ist.

3. Umsetz-Anlage nach einem der vorhergehenden Ansprüche, **dadurch gekennzeichnet, dass**
- die Aufnahmefläche (2a) in Transportrichtung (10) beweglich ist und insbesondere die Oberseite eines Produkt-Förderers (2) ist,
und/oder
- die Ablagefläche (3a) in Transportrichtung (10) beweglich ist und insbesondere die Oberseite eines Tray-Förderers (3) ist.

4. Umsetz-Anlage nach einem der vorhergehenden Ansprüche, **dadurch gekennzeichnet, dass**
- die Roboter-Basis (51) mittels des Roboter-Transporteurs (55) in einer zur Transportrichtung (10) parallel verlaufenden Roboter-Transportrichtung (55') gesteuert verfahrbar ist,
- die Roboter-Transportrichtung (55') in Transportrichtung (10) betrachtet im Breitenbereich zwischen den voneinander wegweisenden äußeren Rändern der Aufnahmefläche (2a) und der Ablagefläche (3a) angeordnet ist.

5. Umsetz-Anlage nach einem der vorhergehenden Ansprüche,
**dadurch gekennzeichnet, dass**
- der Greifer (54) um die aufrechte Richtung, insbesondere die vertikale Richtung (12), drehbar ist um eine Greifer-Achse (54').

6. Umsetz-Anlage nach einem der vorhergehenden Ansprüche,
**dadurch gekennzeichnet, dass**
- der Greifer (54) am unteren Ende einer Greifersäule (57) angeordnet ist,
- entweder die Tragsäule (56) oder die Greifersäule (57) als Hubsäule (58) ausgebildet ist, mittels der die Höhenlage des Greifers (54) veränderbar ist.

7. Umsetz-Anlage nach einem der vorhergehenden Ansprüche,
**dadurch gekennzeichnet, dass**
- an der Roboter-Basis (51) ein Schwenk-Motor (M52) und/oder ein Höhen-Motor (M56) angeordnet sind, insbesondere auch ein Dreh-Motor (M54) und/oder ein Längs-Motor (M51).

8. **Umsetz-Verfahren** zum Umsetzen von Produkten (P) von einer Aufnahmefläche (2a) auf eine Ablagefläche (3a), indem wenigstens ein Roboter (50)
- pro Umsetzvorgang mindestens ein Produkt (P) auf der Aufnahmefläche (2a) ergreift, hochhebt, zur Ablagefläche (3a) transferiert, und auf dieser ablegt,
- die Roboter-Basis (51) zumindest zwischen und/oder während der Umsatzvorgänge in oder entgegen der Transportrichtung (10) gesteuert verfahren wird,
- das Transferieren durch Verschwenken nur eines Schwenkarmes (52) des Roboters (50) erfolgt,
**dadurch gekennzeichnet, dass**
die Aufnahmefläche (2a) in Transportrichtung (10) gesteuert verfahren wird und
- in Zeitabschnitten, in denen der Produkt-Strom entlang der Aufnahmefläche (2a) pro Zeiteinheit größer ist als die von den Robotern (50) bewältigtbare Umsetz-Menge pro Zeiteinheit, wenigstens einer der Roboter (50) in Transportrichtung (10) verfahren wird,
- in Zeitabschnitten, in denen der Produkt-Strom entlang der Aufnahmefläche (2a) pro Zeiteinheit kleiner ist als die von den Robotern (50) bewältigtbare Umsetz-Menge pro Zeiteinheit, wenigstens einer der Roboter (50) entgegen der Transportrichtung (10) verfahren wird.

9. Verfahren nach einem der vorhergehenden Verfahrens-Ansprüche,
**dadurch gekennzeichnet, dass**
die Ablagefläche (3a) parallel zur Transportrichtung (10) gesteuert verfahren wird, insbesondere auch während des Umsetzvorganges, insbesondere in der gleichen Richtung wie die Aufnahmefläche (2a).

## Claims

1. **Transfer system** (1) for transferring products (P) with
- at least one robot (50) for picking up, transferring and depositing at least one product (P) in a transfer area (4),
- a picking surface (2a) for holding available products (P) in the transfer area (4),
- a deposit surface (3a) for depositing products (P) in the transfer area (4),
- a scanner (6) for detecting the position and rotational position of the products (P) in the picking surface (2a),
- a controller (1*) for controlling at least all moving parts of the transfer system (1),
wherein the robot (50) comprises
- a robot base (51) supporting a pivot arm (52),
- the robot base (51) can be moved in a controlled manner by means of a robot transporter (55) in a robot transport direction (55'), being the transport direction (10) which is the main direction of extension (10) of the picking surface (2a),
- the robot transport direction (55'), viewed in the transport direction (10), is arranged between the outer edges, pointing away from each other, of the picking surface (2a) and the depositing surface (3a),
- the pivot arm (52) pivotable about a pivot axis (12') extending in an upright direction (12) and
- comprises a gripper (54) which is attached to the robot arm (51) away from the pivot axis (12'), so as to be movable in height,
**characterized in that**
- the robot transporter (55) and/or the robot base (51) is arranged below the picking surface (2a) and/or the depositing surface (3a),
- between the robot base (51) and the pivot arm (52) there is a supporting column (56) running in the upright direction (12), in particular the vertical (12), and extending between the picking surface (2a) and the depositing surface (3a).

2. Transfer system according to claim 1,
**characterized in that**
the upright direction (12) is the vertical (12),
and/or
the directions of extension (10, 11) of the picking surface (2a) are at right angles to the upright direction (12), in particular the vertical (12), and in particular the picking surface (2a) is horizontal
and/or
- the depositing surface (3a) is parallel to the picking surface (2a) and in particular is arranged at the same height.

3. Transfer system according to one of the previous claims,
**characterized in that**
- the picking surface (2a) is movable in the transport direction (10) and is in particular the upper side of a product conveyor (2),
and/or
- the depositing surface (3a) is movable in the transport direction (10) and is in particular the upper side of a tray conveyor (3).

4. Transfer system according to one of the previous claims,
**characterized in that**
- the robot base (51) can be moved in a controlled manner by means of the robot transporter (55) in a robot transport direction (55') running in parallel to the transport direction (10),
- the robot transport direction (55'), viewed in the transport direction (10), is arranged in the width range between the outer edges, pointing away from each other, of the picking surface (2a) and the depositing surface (3a).

5. Transfer system according to one of the previous claims, **characterized in that**
- the gripper (54) is rotatable about the upright direction, in particular the vertical direction (12), about a gripper axis (54').

6. Transfer system according to one of the previous claims, **characterized in that**
- the gripper (54) is arranged at the lower end of a gripper column (57),
- either the support column (56) or the gripper column (57) is designed as a lifting column (58), by means of which the height position of the gripper (54) can be changed.

7. Transfer system according to one of the previous claims,
**characterized in that**
- a swivel motor (M52) and/or a height motor (M56) are arranged at the robot base (51), in particular also a turning motor (M54) and/or a longitudinal motor (M51).

8. **Transfer method** for transferring products (P) from a picking surface (2a) to a depositing surface (3a) by means of at least one robot (50)
- which per transfer operation, grips at least one product (P) on the picking surface (2a), lifts it up, transfers it to the deposit surface (3a), and deposits it there,
- the robot base (51) is moved in a controlled manner in or against the transport direction (10) at least between and/or during the transfer processes,
- the transfer is carried out by pivoting only one pivot arm (52) of the robot (50),
**characterized in that**
the picking surface (2a) is moved in a controlled manner in the transport direction (10),
- in time periods in which the product flow along the picking surface (2a) per time unit is greater than the transfer quantity per time unit which can be handled by the robots (50), at least one of the robots (50) is moved in the transport direction (10),
- in time periods in which the product flow along the picking surface (2a) per unit of time is smaller than the transfer quantity per unit of time that can be handled by the robots (50), at least one of the robots (50) is moved against the transport direction (10).

9. Method according to the previous method claim,
**characterized in that**
the depositing surface (3a) is moved in a controlled manner parallel to the transport direction (10), in particular also during the transfer operation, in particular in the same direction as the picking surface (2a).

## Revendications

1. **Installation de transfert** (1) pour le transfert de produits (P) avec
- au moins un robot (50) pour prendre, déplacer et déposer au moins un produit (P) dans une zone de transfert (4),
- une surface de réception (2a) pour tenir des produits (P) dans la zone de transfert (4),
- une surface de dépôt (3a) pour déposer des produits (P) dans la zone de transfert (4),
- un scanner (6) pour détecter la position et la position de rotation des produits (P) sur la surface de réception (2a),
- une commande (1*) pour commander au moins toutes les parties mobiles de l'installation de transfert (1),
dans lequel le robot (50)
- comprend une base de robot (51) qui porte un bras pivotant (52),
- la base de robot (51) peut être déplacée de manière commandée au moyen d'un transporteur de robot (55) dans une direction de transport de robot (55'), qui est la direction de transport (10), la direction d'extension principale (10) de la surface de réception (2a),
- la direction de transport de robot (55'), vue dans la direction de transport (10), est disposée entre les bords extérieurs, s'écartant l'un de l'autre, de la surface de réception (2a) et de la surface de dépôt (3a),
- le bras pivotant (52) peut pivoter autour d'un axe de pivotement (12') s'étendant dans une direction verticale (12) et
- comprend un préhenseur (54) qui est fixée au bras de robot de manière mobile en hauteur à l'écart de son axe de pivotement (12'),
**caractérisée en ce que**
- le transporteur de robot (55) et/ou la base de robot (51) sont disposés en dessous de la surface de réception (2a) et/ou de la surface de dépôt (3a),
- entre la base de robot (51) et le bras pivotant (52) se trouve une colonne de support (56) s'étendant dans la direction verticale (12), en particulier la verticale (12), qui s'étend entre la surface de réception (2a) et la surface de dépôt (3a).

2. Installation de transfert selon la revendication 1,
**caractérisée en ce que**
- la direction verticale (12) est la verticale (12),
et/ou
- les directions d'extension (10, 11) de la surface de réception (2a) s'étendent à angle droit par rapport à la direction verticale (12), en particulier la verticale (12), et en particulier la surface de réception (2a) est horizontale
et/ou
- la surface de dépôt (3a) est parallèle à la surface de réception (2a) et est notamment disposée à la même hauteur.

3. Installation de transfert selon l'une quelconque des revendications précédentes, **caractérisée en ce que**
- la surface de réception (2a) est mobile dans la direction de transport (10) et est notamment la face supérieure d'un convoyeur de produits (2),
et/ou
- la surface de dépôt (3a) est mobile dans la direction de transport (10) et est en particulier la face supérieure d'un convoyeur de plateaux (3).

4. Installation de transfert selon l'une des revendications précédentes,
**caractérisée en ce que**
- la base de robot (51) peut être déplacée de manière commandée au moyen du transporteur de robot (55) dans une direction de transport de robot (55') parallèle à la direction de transport (10),
- la direction de transport de robot (55'), vue dans la direction de transport (10), est disposée dans la zone de largeur entre les bords extérieurs, opposés l'un à l'autre, de la surface de réception (2a) et de la surface de dépôt (3a).

5. Installation de transfert selon l'une des revendications précédentes,
**caractérisée en ce que**
- le préhenseur (54) peut tourner autour de la direction droite, en particulier la direction verticale (12), autour d'un axe de préhension (54').

6. Installation de transfert selon l'une quelconque des revendications précédentes,
**caractérisée en ce que**
- le préhenseur (54) est disposé à l'extrémité inférieure d'une colonne de préhension (57),
- soit la colonne de support (56), soit la colonne de préhension (57) est réalisée sous forme de colonne de levage (58), au moyen de laquelle la position en hauteur du préhenseur (54) peut être modifiée.

7. Installation de transfert selon l'une des revendications précédentes,
**caractérisée en ce que**
- un moteur de pivotement (M52) et/ou un moteur de hauteur (M56) sont disposés sur la base de robot (51), en particulier également un moteur de rotation (M54) et/ou un moteur longitudinal (M51).

8. **Procédé de transfert** pour transférer des produits (P) d'une surface de réception (2a) sur une surface de dépôt (3a), en ce qu'au moins un robot (50)
- saisit au moins un produit (P) sur la surface de réception (2a) par processus de transfert, le soulève, le transfère vers la surface de dépôt (3a) et le dépose sur celle-ci,
- la base de robot (51) est déplacée de manière commandée dans la direction de transport (10) ou dans la direction opposée, au moins entre et/ou pendant les opérations de transfert,
- le transfert s'effectue par pivotement d'un seul bras pivotant (52) du robot (50),
**caractérisée en ce que**
- la surface de réception (2a) est déplacée de manière commandée dans la direction de transport (10) et
- dans les intervalles de temps pendant lesquels le flux de produit le long de la surface de réception (2a) par unité de temps est supérieur à la quantité de transfert pouvant être maîtrisée par les robots (50) par unité de temps, au moins un des robots (50) est déplacé dans la direction de transport (10),
- dans les intervalles de temps pendant lesquels le flux de produit le long de la surface de réception (2a) par unité de temps est inférieur à la quantité de transfert par unité de temps pouvant être maîtrisée par les robots (50), au moins l'un des robots (50) est déplacé en sens inverse de la direction de transport (10).

9. Procédé selon l'une des revendications de procédé précédentes,
**caractérisée en ce que**
la surface de dépôt (3a) est déplacée de manière commandée parallèlement à la direction de transport (10), en particulier également pendant l'opération de transfert, notamment dans la même direction que la surface de réception (2a).
